# EUROPEAN PATENT APPLICATION

(11) **EP 0 849 946 A2**
(43) Date of publication of application: **24.06.1998**
(21) Application number: 97120291.6
(22) Date of filing: 19.11.1997
(51) Int. Cl.: H04N 7/08

(54) **Interactive TV broadcasting system and file access method applied thereto**

(30) Priority: 13.12.1996 JP 334008/96
(71) Applicant: KABUSHIKI KAISHA TOSHIBA, Kawasaki-shi (JP)
(72) Inventor: Takami, Katsunori, 1-1 Shibaura 1-chome Minato-ku Tokyo 105 (JP); Sekiguchi, Dairoku, 1-1 Shibaura 1-chome Minato-ku Tokyo 105 (JP); Miura, Seiji, 1-1 Shibaura 1-chome Minato-ku Tokyo 105 (JP)
(74) Representative: Henkel, Feiler, Hänzel

(57) **Abstract**

An HTML file is converted to an IT script and then distributed from a TV station 12 or response server (15) to each home TV receiver (11). In this case, link information which is the most significant feature of the HTML file is used as the operation guiding button of the IT script. If the button is selected by the user by use of a remote-control unit or the like, access is automatically made to the response server (15) via a trunk line network (14). In the response server (15), a large number of HTML files converted to interactive program scripts are previously held and an IT script corresponding to an HTML file specified by the link information assigned to the button selected by the viewer is transmitted online from the response server to the TV receiver (11).

## Description

This invention relates to an interactive TV broadcasting system and a file access method applied to the system.

An information network using computers as is represented by an INTERNET is rapidly developed. Information circulated on the INTERNET is a file in the form of HTML (Hyper Text Markup Language) and has a feature that information of link with respect to another file is contained therein in addition to a text and graphics. By utilizing the link information, it becomes possible to provide a link with a desired resource on the INTERNET.

However, the computer operation for INTERNET access is relatively complicated and it is difficult for those who are not skilled in handling the personal computer, those who are weak in the mechanical operation and old people to join the INTERNET.

In the field of broadcasting technology using home TV, use of an INTERNET TV is known as the technique for referring to the information resource on the network.

The INTERNET TV is constructed by installing a WWW browser for INTERNET access used by a personal computer and a processor for executing the same on a general home TV and the TV screen is used instead of a display monitor of the personal computer.

In the INTERNET TV, INTERNET access can be made by a simple operation, but since the TV is directly connected to an INTERNET provider via a telephone line, the INTERNET access and the TV broadcasting are made completely independent from each other. In order to realize the access performance with which the user is satisfied on the INTERNET TV, it is necessary to mount a high-performance processor comparable with the personal computer on the TV, thereby causing a problem that the cost of the TV becomes high.

Therefore, recently, as a new information service form in the multimedia age, much attention is given to an interactive TV broadcasting system which is a service obtained by expanding the function of the TV multiplexed text broadcasting service.

The interactive TV broadcasting system utilizes the intertext technology for distributing digital data other than the TV video signal to television receivers by using the vertical blanking interval (VBI) of the TV broadcasting signal and is constructed by a TV equipment, home TV receiver and response server.

An interactive program script including operation guiding buttons and various information items is superimposed on the VBI of the television broadcasting signal, then transmitted from the TV station to home TV receivers and displayed on the screens of the TV receivers. If a viewer operates the button displayed on the screen by use of a remote-control system, then a response or service request from the viewer is automatically transmitted to the response server via the trunk line network in response to the remote-control operation. Responses transmitted from the viewers and collected in the response server are fed back to the program provider of the TV station. Further, the online service for providing programs from the response server to the TV receivers via the trunk line network is performed.

The above interactive TV broadcasting system can realize the interactive information providing service such as an INTERNET by a simple remote-control operation by the viewer.

However, the conventional interactive TV broadcasting system is required to use an exclusive interactive program script including operation guiding buttons and various information items. For this reason, an operation of a dedicated authoring tool has to be mastered to create the exclusive interactive program script. Since the learning of the dedicated authoring tool is time-consuming, it poses a problem that it is time-consuming to create the contents of the program. Therefore, it is desired that the contents circulated on the INTERNET can be utilized by the interactive TV broadcasting system.

An object of this invention is to provide an interactive TV broadcasting system capable of permitting a hyper text file such as HTML circulated on the INTERNET to be used as the interactive program script and easily accessing abundant contents on the INTERNET from the TV receiver and a file access method applied to the system.

According to this invention, an interactive television broadcasting system for transmitting an interactive program script including operation guiding graphics data and various information items and superimposed on a television broadcasting signal to display the interactive program script on the screen of the television receiver and transmitting a response or service request from the viewer from the television receiver to a response server via a network comprises: script converting means for converting data with a link structure having an address of other data to be referred to as designating information to the interactive program script and converting the address as the designating information to the graphics data of the interactive program script; means for superimposing the interactive program script converted by the script converting means on the television broadcasting signal and transmitting the resultant of superimposition; script decoder means for decoding the interactive program script transmitted by the transmitting means to display the same on the screen of the television receiver; and means for accessing the response server in response to the selecting operation by the viewer for the operation guiding graphics data on the screen, acquiring an interactive program script corresponding to data specified by the address designating information assigned to the graphics data from the data with the link structure previously converted as the interactive program script and held in the response server and displaying the acquired interactive program script on the screen of the television receiver by use of the script decoder means.

In the above interactive television broadcasting system, a hyper text file (data with a link structure) such as HTML circulated on the INTERNET is converted to an interactive program script which is in turn distributed from the TV station to the home TV receivers. In this case, link information which is the most significant feature of the hyper text file is used as the operation guiding button of the interactive program script. If the button is selected by the user by use of a remote-control unit or the like, access is automatically made to the response server via the trunk line network. In the response server, a large number of hyper text files converted to interactive program scripts are previously held and an interactive program script corresponding to a hyper text file specified by the link information assigned to the button selected by the user is transmitted online to the TV receiver from the response server. As a result, a jump between Web pages as in the INTERNET can be performed and it becomes possible to easily look at desired contents present on the network on TV.

Further, since several hyper text files can be transmitted by use of the broadcasting signal, the file can be displayed on the screen without using the response server in a case where a hyper text file specified by the link information assigned to the button selected by the user has been already transmitted via the broadcast.

Further, it is preferable to previously provide the script converting means in the response server, access another server to acquire a file specified by the link information when an interactive program script corresponding to the file specified by the link information is not held in the above response server, then convert the thus acquired file to an interactive program script on the real-time basis and transmit the same to the TV receiver. In this case, it becomes possible to access a desired resource in the world in exactly the same manner as in the INTERNET.

Further, according to this invention, an interactive television broadcasting system for transmitting an interactive program script including operation guiding graphics data and various information items and superimposed on a main program of a television broadcasting signal to display the interactive program on the screen of the television receiver and transmitting a response or service request from the viewer from the television receiver to a response server via a network comprises: address designating information reading means for reading address designating information indicating the location of other data to be referred to and contained in video data of the main program from the video data of the main program; means for assigning the address designating information read by the address designating information reading means to the graphics data to display the resultant of assignment on the screen of the television receiver; and means for accessing the response server in response to the selecting operation of the graphics data displayed on the screen of the television receiver to acquire an interactive program script corresponding to data specified by the address designating information assigned to the graphics data from the data with the link structure previously converted as the interactive program script and held in the response server and display the acquired interactive program script on the screen of the television receiver.

In the above interactive television broadcasting system, when link information such as an address of a Web page is displayed, for example, by use of telop in the video data of the main program, the link information is automatically read and displayed as a button on the screen. If the button is selected by the remote-control operation or the like, access to the response server is made. In the response server, a large number of hyper text files previously converted to the interactive program scripts are held and an interactive program script corresponding to a hyper text file specified by the link information assigned to the button selected by the user is transmitted online from the response server to the TV receiver. As a result, a jump from a normal selected program which does not use the interactive program script to a Web page of the program can be performed and it becomes possible to make the present broadcasting program compatible with the INTERNET.

This invention can be more fully understood from the following detailed description when taken in conjunction with the accompanying drawings, in which:
FIG. 1 is a block diagram showing the construction of an interactive TV system according to one embodiment of this invention;
FIGS. 2A through 2C are diagrams showing the procedure of a jump process between Web page programs in the system of the above embodiment;
FIG. 3 is a flowchart for illustrating the procedure of an HTML-IT script conversion process applied in the system of the above embodiment;
FIG. 4 is a diagram for illustrating the principle of a telop reading jump system applied to the system of the above embodiment;
FIG. 5 is a diagram showing the construction of an IT scripting verifying system applied to the system of the above embodiment;
FIG. 6 is a diagram showing the construction of an ITV INTERNET search agent applied to the system of the above embodiment; and
FIG. 7 is a flowchart for illustrating the procedure of an automatic form generation process using the ITV INTERNET search agent of FIG. 6.

There will now be described an embodiment of this invention with reference to the accompanying drawings.

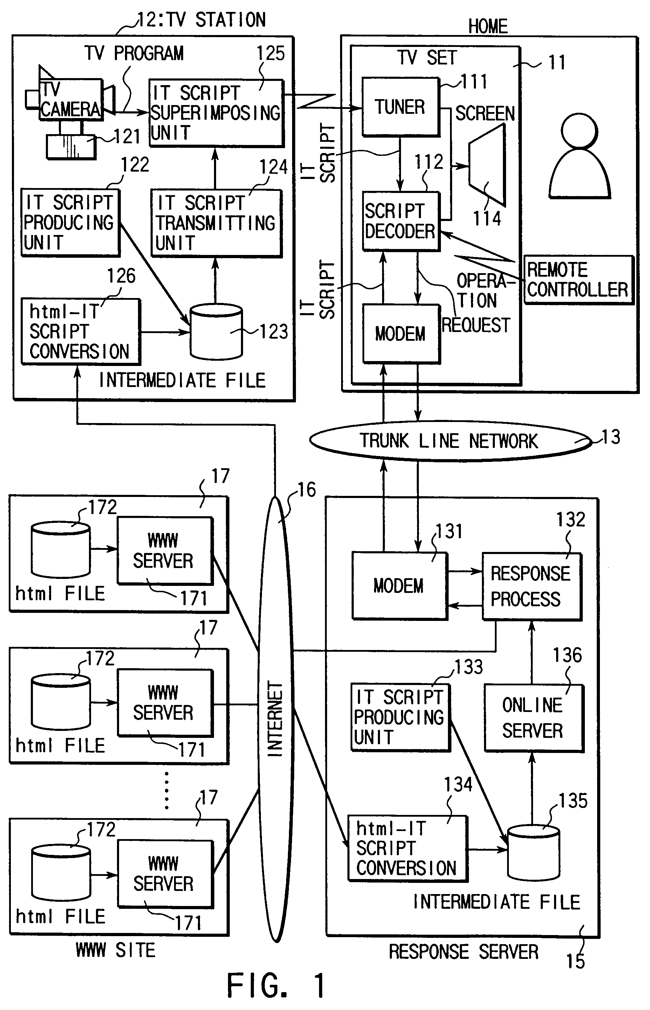

In FIG. 1, the basic construction of an interactive TV system according to one embodiment of this invention is shown. First, the principle of the interactive TV system is explained with reference to FIG. 1.

The interactive TV system of FIG. 1 attains the interactive effect of the program by making use of the function of the present multiplexed text broadcasting and the telephone communication function and includes an interactive TV receiver 11 placed in each home, a TV station 12, a trunk line network 13 such as a telephone line network, and a response server 15 accessible to servers 17 on respective WWW (World Wide Web) sites of an INTERNET 16.

The TV station 12 transmits an interactive program script for attaining the interactive performance based on the intertext system. The interactive program script (which is hereinafter referred to as an IT script) is one type of computer program in which the procedure of proceeding with the interactive program is described and is superimposed on the VBI of a TV broadcasting signal and transmitted.

The IT script is stored in a memory of the TV receiver 11 which receives the TV broadcasting signal and is executed by a CPU of a multiplexed text broadcasting receiver (script decoder) incorporated in the TV receiver 11. The CPU displays a symbol mark "i" indicating that the present program is an interactive multiplexed text broadcasting program on the screen to inform the viewer of this fact, starts to execute the IT script in response to the selection instruction from the viewer, and reproduces the interactive program.

A response from the viewer for the interactive program is received by the TV receiver 11 by operating a remote controller 115, for example. At this time, the response may be terminated in a self-terminating manner in the TV receiver 11 in some cases, but it is also possible to transmit the result of the response to the response server 15 provided on each area via the trunk line network 13, transmit the result of the response to the TV station 12 from a response process 132 via a line (not shown), and reflect the result of the response on the program contents provided by the TV station 12 on the real-time basis.

The system can be realized by expanding the function of the existing multiplexed text broadcasting system by use of software. Further, a response from the viewer is transmitted via a telephone line. Therefore, it is not necessary to newly prepare an infrastructure. Even if the script is broadcasted via the multiplexed text broadcasting system, no influence is given at all to the present TV broadcasting, multiplexed text broadcasting and TV receiver.

In addition to a normal TV broadcasting tuner 111, in each of the TV receivers 11, a script decoder 112 and modem 113 are provided to realize an interactive program. The script decoder 112 reads an IT script from the TV broadcasting signal transmitted from the TV station 12 and executes the script to display the interactive multiplexed text broadcasting program on a display screen 114.

In this case, the viewer makes a response to the screen of the interactive program by use of a remote-control unit 115 for TV operation. The response operation is effected by selecting a button (graphics data) displayed on the screen by use of the remote-control unit 115. When data is transmitted to the response server 15, the automatic dialing operation is effected by the modem 113 and a connection to the response server 15 is made. Data is instantly transmitted in some cases or can be transmitted not instantly but after a preset period of time, for example, in the nighttime.

Since the modem 113 has a function of automatically effecting the dialing operation, the dialing operation by the viewer only for transmitting data is not necessary. The telephone number of the automatic dialing destination is embedded in the IT script from the TV station 12 side for each interactive program and transmitted. The script decoder 112 includes a processor for executing the program. Since the conventional multiplexed text broadcasting decoder also includes a processor, the script decoder 112 can be attained by expanding the function of the conventional multiplexed text broadcasting decoder by use of software.

In a case where an audience-participation program on which the response of the viewer is reflected is broadcasted, the TV station 12 inserts the IT script into the broadcasting signal containing normal video and audio signals and transmits the same. A program producing system for reproducing and inserting the IT script can be constructed by a personal computer and a multiplexing unit (in FIG. 1, it is shown as an IT script producing unit 122).

The TV station 12 inserts the IT script into the broadcasting wave in the form of addition to the normal program and broadcasts the same. The IT script is roughly divided into a script which the TV station itself produces, a script which a third party such as an advertising agent or mail-order firm produces and a script using a Web page described by use of an HTML file circulated on the INTERNET. Further, the script which the TV station produces includes a script which can be previously prepared and a script which is inserted live at the time of relay broadcasting of a sport program, for example.

As the broadcasting equipment of the TV station 12, there are provided the IT script producing unit 122, an intermediate file storing unit 123 for storing the IT script produced by the IT script producing unit 122 in an intermediate file format (assembler format), an IT script transmitting unit 124 for reading out an IT script of intermediate format from the intermediate file storing unit 123, converting the IT script into a transmission data format and outputting the same as IT script data, and an IT script superimposing unit 125 for superimposing IT script data on the VBI of a normal TV program in addition to a camera 121 for taking video pictures of a normal TV program. Further, in this embodiment, in order to make it possible to use a Web page on the INTERNET described in the HTML file as the IT script, an HTML-IT script converting unit 126 for converting the contents formed in the HTML format into the intermediate file format of the IT script is also provided.

Now, the construction of the IT script is explained.

The IT script is realized as a set of the following objects.
(1) Background, display material
(2) Button for guide operation
(3) Character string
(4) Image

Each of the above objects can be made to have a supplementary process (procedure) and the procedure is described by use of an extended BASIC language or the like. The language is obtained by providing a control instruction for interactive broadcasting to the normal BASIC language.

At the time of execution of the above script, the screen constituting elements such as the button and the background of the screen are first displayed. If the viewer selects the button, a program corresponding to the button is started.

When the HTML file is converted to an IT script, link information embedded in the HTML file is converted as one button of the IT script. That is, in the HTML file, a URL (Uniform Resource Locator) is described as the link information (address designating information) indicating the location of another file and an http address of the link information, that is, a scheme name indicating the protocol for accessing the link resource, a server name on the INTERNET for providing the resource and a path name indicating the HTML file in the server are specified by the URL. The address of the link information specified by the URL is assigned as a label on the button and displayed on the screen of the TV receiver 11.

The response server 15 collects responses from the TV receivers 11 and provides various online services in response to service requests from the TV receivers 11, and as shown in FIG. 1, it includes a modem 131, a response process executing section 132 for executing a process for the response from the TV receiver 11, and an online server 136 for providing the online service for, for example, transmitting an IT script to the TV receiver 11 via the trunk line network 13. The IT script transmitted by the online server 136 is previously stored in the form of intermediate file in an intermediate file storing unit 135. The IT script stored in the intermediate file storing unit 135 includes a script produced by an IT script producing unit 133 in the response server 15 and a script converted from the HTML file by an HTML-IT script converting unit 134.

The form of the interactive program realized by the above interactive TV system is roughly divided into the following five programs.

### (1) Supplementary information program:

Additional information for the advertised article is selectively displayed.

Data at the time of relay broadcasting of a sport program is selectively displayed.

The contents of a program are displayed.

A cook recipe is previously stored and displayed later.

Responses to questions are made in the infant education program.

Responses to answers from the viewers are made in the quiz program.

### (2) Response feedback program (response server is used):

A questionnaire on politics, economy, social news is set out.

A questionnaire is set out in a sport program.

Display of statistics of correct answers and tournament are performed in an audience-participation quiz program.

### (3) Program with transaction (response server is used):

Orders are received by a response server in a teleshopping program.

Catalogue requests are received by a response server in the advertisement with request or information.

Audience-participation program data is transmitted to a response server after obtaining the consent from the audience for audience rating survey.

### (4-1) Online service (Type 1):

An interactive program is changed over to an online service in which the service is provided via a communication line network by selecting an interactive TV broadcasting program according to the will of audience.

Online shopping is selected during CM. The request is transmitted to the server via the communication line network and the online service for providing an interactive program containing detail information of an article from the server to the TV receiver via the communication line network is started.

The online service is started when an application for reservation for available flight is made after checking a seat reservation state of aircraft provided as an interactive TV broadcasting program or normal multiplexed text broadcasting program. The server provides an interactive program containing inquiries such as class, adult/child, the number of persons, nonsmoking/smoking, window side/aisle side to TV receiver via the communication line network.

### (4-2) Online service (Type 2):

An interactive program is provided from the server to the TV receiver via the communication line network independently from TV broadcasting. In this case, information is provided from the server via the communication line network and communication with the server is made after audience has selected the information.

Audience selects an interactive program from the online service menu transmitted from the server.

### (5) Web page program:

A Web page corresponding to the TV broadcasting program is displayed in connection with the TV broadcasting program.

A Web page is displayed on the screen independently from the TV broadcasting program.

A link Web page is provided online from the response server to audience in response to selection of a link button displayed on the screen of the Web page.

A URL introduced by use of video data such as a telop in a normal TV broadcasting program is automatically recognized and a Web page specified by the URL is provided online from the response server to audience.

The contents provided in the Web page program are provided in the IT script format obtained in the converting process of the HTML-IT script converting units 126, 136.

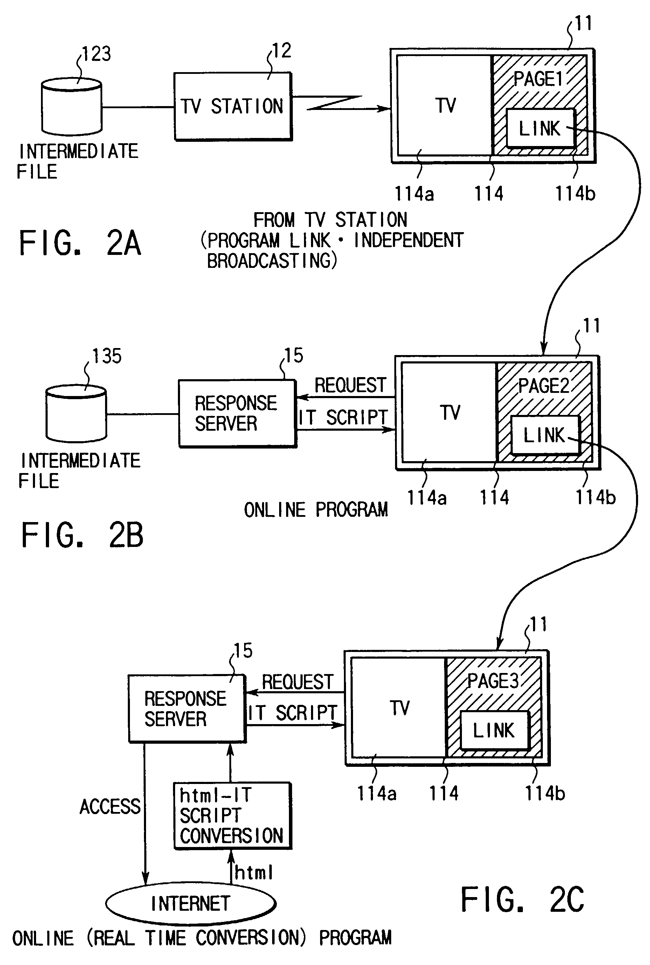

Next, the procedure of the jump process between the Web page programs is explained with reference to FIG. 2.

The contents provided in the Web page program are transmitted from the intermediate file 123 in the TV station as shown in FIG. 2A, transmitted from the intermediate file 135 in the response server 15 as shown in FIG. 2B, and transmitted after reference is made via the INTERNET and the html-IT script conversion is performed when the specified contents are not present in the intermediate file 135 in the response server 15 as shown in FIG. 2C. In this case, the program link shown in FIG. 2A indicates that when an "i" mark ("i" means Inter Text and indicates that a program on a different channel is provided) is displayed on the screen during the broadcasting of a trip program, for example, and if it is selected by the operation of the remote-control unit 115, information appended to the screen, for example, a home page of hotels in the area or a home page of stores for shopping is displayed. Further, the program link type or independent broadcasting type is recognized by determining the position of a wave of the VBI on which the "i" mark is superimposed based on the engine in the script decoder 112. In the case of a program on a different channel which is not approved by the sponsor, information that the program on the different channel is inserted is displayed by use of an LED on the tuner.

In the TV station 12, a Web page circulated on the INTERNET is converted to an IT script by the HTML-IT script converting unit 126 and held in the intermediate file format in the intermediate file storing unit 123. The Web page of the intermediate file format is superimposed on the main program and distributed to the home TV receivers 11. When the IT script is received, the "i" mark is displayed on the screen in the TV receiver 11, and if it is selected by the operation of the remote-control unit 115, the screen 114 is divided into two sections and the main program is displayed on a TV screen 114a and the Web page (page 1) is displayed on an interactive program screen 114b. Link information embedded in the Web page is displayed as a link button on the interactive program screen 114b.

When the link button is selected by the remote-control operation by the viewer, access to the response server 15 is automatically made via the trunk line network 13. In the intermediate file 135 of the response server 15, a large number of Web pages converted into IT scripts of intermediate file format are previously held, one of the Web pages specified by the link information assigned to the link button selected by the user is transmitted online from the response server 15 to the TV receiver 11, and the Web page (page 2) is displayed on the interactive program screen 114b. The link information embedded in the Web page 2 is also displayed as the link button on the interactive program screen 114b, and if it is selected by the remote-control operation by the viewer, access to the response server 15 is automatically made via the trunk line network 13 again.

When the Web page specified by the link information assigned to the link button selected by the user is present in the intermediate file 135, the same online service as described before is provided by the response server 15, but if the Web page is not present, the response server 15 acquires a corresponding Web page (page 3) from the WWW site via the INTERNET 16. The Web page (page 3) is converted to an IT script on the real-time basis by the HTML-IT script converting unit 136 and transmitted online from the response server 15 to the TV receiver 11, and then the Web page (page 3) is displayed on the interactive program screen 114b.

As a result, a jump between the Web pages can be performed in the same manner as in the case of INTERNET and it becomes possible to easily look at the contents lying in a desired WWW site on the INTERNET on the TV receiver 11.

Further, since several Web pages can also be collectively transmitted by use of the broadcasting signal, a Web page specified by the link information assigned to the button selected by the user can be instantly displayed on the screen without using the response server 15 if the Web page has been already distributed to the memory of the TV receiver 11 via the broadcasting.

It is also possible to previously prepare an area for storing a button to which the address information of a Web page favorably selected by the viewer is assigned on the memory of the TV receiver 11, select a button by reading out the button from the memory to acquire an IT script corresponding to the Web page specified by the address information of the selected button from the response server 15 or from the WWW server 17 via the response server 15, and display the IT script on the screen of the TV receiver 11.

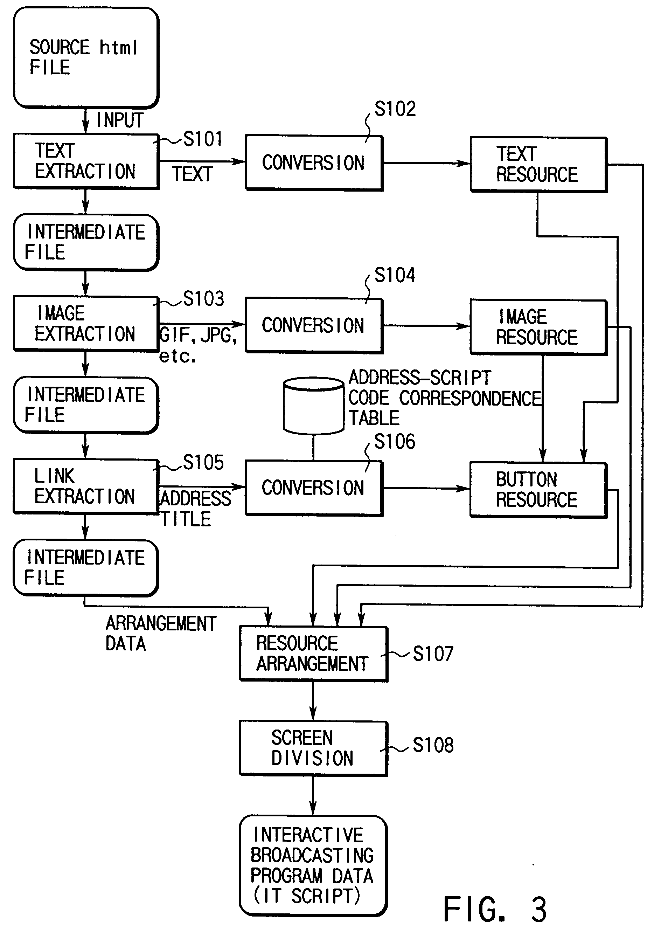

Next, the HTML-IT script converting method effected by the HTML-IT script converting units 126, 136 is explained with reference to the flowchart of FIG. 3.

An input in the HTML-IT script converting process is an HTML file which is used as a source of a program. In the HTML file, a text, image file, link destination and the like to be displayed on the screen are held together with a special control sentence in the text format. The HTML file is downloaded from each WWW site via the INTERNET 16.

First, a text extraction process for extracting a text from the HTML file is effected (step S101). In the text extraction process, a text to be displayed is extracted from the HTML file separately from the control sentence. When the text is extracted, the text portion in the HTML file is replaced by a resource identifier corresponding thereto. The values of the resource identifiers are uniquely assigned in the file according to a series of extracted texts.

The extracted text is converted to a text resource for IT script in the text converting process (step S102) and stored together with the resource identifier assigned to the text.

The text extracting process generates an intermediate file having the display text replaced by the resource identifier from the HTML file as an output. This is not necessarily provided in a file format and is intermediate data obtained in the course of the process.

Next, the image data extracting process is effected (step S103). In the image data extracting process, an intermediate file already subjected to the text extraction process is used as an input and image data is extracted therefrom. In the HTML, a display image is indicated by an image file name held in a format such as GIF. The file is downloaded from the WWW site and a portion of the image file name in the HTML file is replaced by a unique resource identifier indicating an image portion. Then, the downloaded image file is converted to an image resource of a format which can be transmitted as an IT script by the image converting process (step S104) and then stored together with the resource identifier for image.

Next, the link information extracting process is effected (step S105). In the link information extracting process, an http address described in the URL is extracted from the intermediate file and a portion of the http address is replaced by a unique resource identifier for address. The extracted address is compared with an address-program code correspondence table in the address conversion process (step S106). In the address-program code correspondence table, the addresses of Web pages already converted to IT scripts and held in the response server 15 and unique program ID codes used for reading out corresponding programs are stored. By use of the table, the HTTP address is converted to a program ID code when a link is made to the already converted WWW site. As a result, it becomes possible to access a Web page by use of a program ID code which is the same as the normal online service program. Further, an address resource (hereinafter referred to as a button resource) for performing a jump to the link destination is generated. When image information and text information (such as a title) attached to the link are present, the extracted text resource and image resource are read out by referring to the identifiers thereof and embedded in the button resource. This button resource is stored together with the address resource identifier.

Finally, the resource arranging process for arranging the text resource, image resource, button resource on the actual screen based on the arrangement of the control sentence and resource identifier is effected (step S107). If the size of the created screen is excessively large, screen division is effected. Further, if the amount of data of one image resource is extremely large, a response at the time of reception by the TV receiver is taken into consideration, and only the button indicating the image is attached to the screen used as a base and data is divided by use of the button so that the image can be read out.

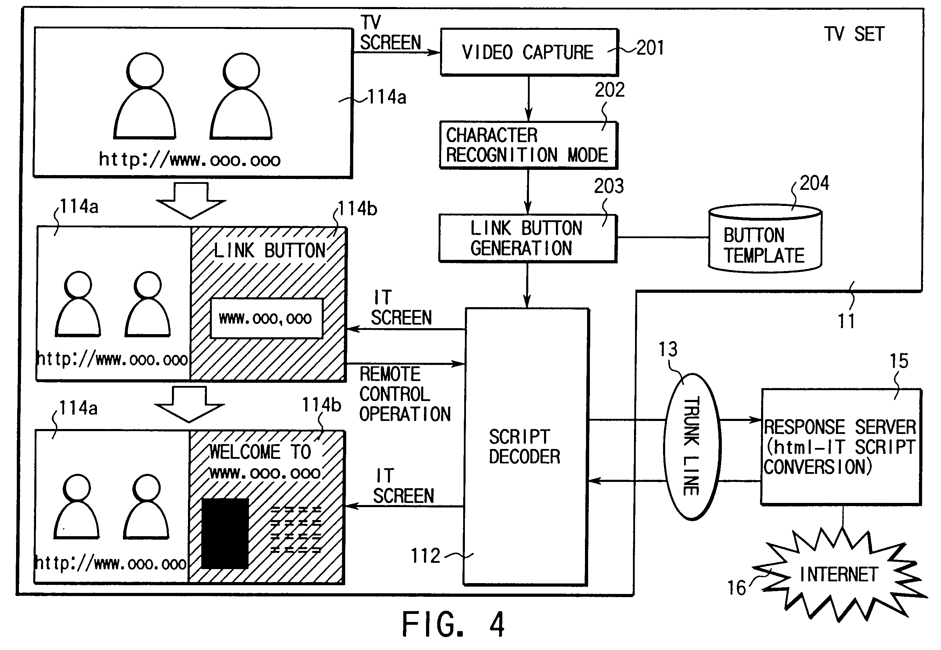

Next, a telop reading jump system applied to the interactive TV broadcasting system of this embodiment is explained with reference to FIG. 4.

At present, all of the TV broadcasts do not perform the IT broadcasting. Therefore, a large number of programs containing no IT script on the broadcasting wave are present. If it is desired to make a link to the INTERNET in such a program, an HTTP address is displayed on the TV screen in a form in which a telop (superimposition) is used or an actually drawn image is taken by a TV camera (for example, a scene in which a person has paper having a URL (Uniform Resource Locator) written thereon is broadcasted as it is). In this embodiment, in order to show information on the INTERNET to the viewer simply by the remote-control operation, an HTTP address is automatically read out and a button which can jump to the address is displayed on the TV receiver 11. If the button is selected by the remote-control operation, access to the response server 15 is automatically made, and an IT script corresponding to a Web page specified by the HTTP address is read out from the intermediate file storing unit 135 in the response server 15 and transmitted to the TV receiver 11. If an IT script corresponding to the Web page specified by the HTTP address is not present in the response server 15, the response server 15 acquires a corresponding Web page from the WWW site via the INTERNET 16. The Web page is converted to an IT script on the real-time basis by the HTML-IT script converting unit 136 and then transmitted from the response server 15 to the TV receiver 11.

In order to realize the telop reading jump system, it is necessary to always set a process for the system in the running state in the TV receiver 11. It is preferable that the process can be set ON/OFF by the user setting operation.

The process is effected to always monitor the TV screen, fetch video data displayed on the TV screen by use of a video capture 201, and read characters from the fetched video data by use of a character recognition module 202. If a character string starting with "http://" which indicates the HTTP address display of WWW is present in the screen, the character string is determined as an address and information thereof is transmitted to a link button generation module 203.

The process is effected by repeatedly effecting an operation loop of screen fetching by the video capture 201 and recognition by the character recognition module 202.

When the HTTP address is displayed on the TV screen, the link button generation module 203 adds an address to the link button by use of a template 204 of link button/form to construct an IT screen and transmit the same to the script decoder 112. Several templates are previously prepared and one of the templates can be selectively set on the TV receiver 11 side.

In the script decoder 112, data transmitted from the link button generation module 203 is displayed on the TV screen in the same manner as in a case wherein the IT script is transmitted by broadcasting. In the TV receiver 11, an "i mark" indicating the incoming of the IT script is displayed. At this time, if the viewer depresses the "i button" of the remote-control unit, a form in which a link button for providing a link with the Web page of the HTTP address is embedded is displayed. Further, if the button is selected by use of the remote-control unit and a "determination" button is operated, the response server 15 is accessed, the IT script of a corresponding Web page is acquired from the response server 15 or a corresponding Web page is acquired from the WWW site on the INTERNET via the response server 15 and it is converted to an IT script, transmitted to the TV receiver 11 and displayed on the screen.

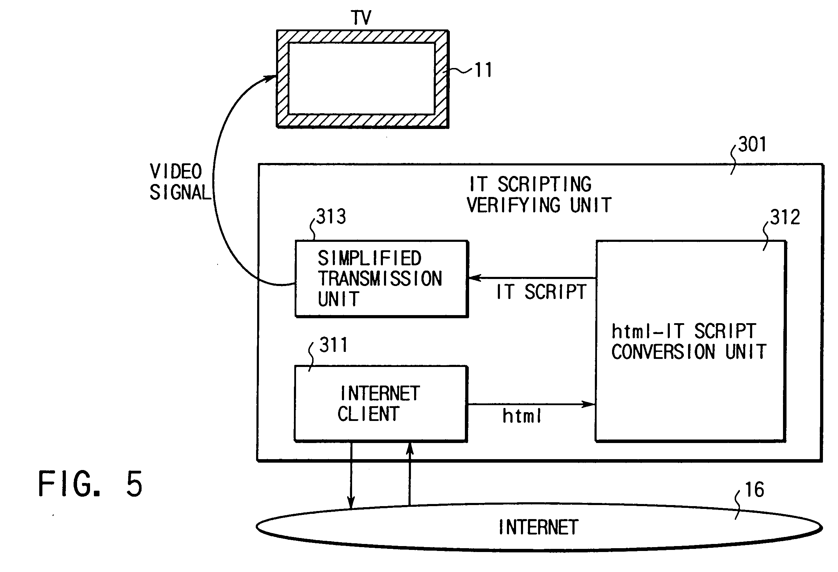

Next, an IT scripting verifying system of the HTML file is explained with reference to FIG. 5.

The system is a system necessary for processing (HTML-IT script converting) a Web page on the INTERNET in the interactive TV system for an IT script and producing programs.

Information of various types of Web pages is provided on the INTERNET, but a format suitable for broadcasting cannot always be obtained even if the pages are converted to IT scripts as they are. Therefore, it is necessary to previously verify the design of the page converted to the IT script before it is put on the broadcasting wave and check whether it should be stored as the IT script or not. The above verification is effected in this system.

As shown in FIG. 5, the IT scripting verifying system includes an INTERNET client 311 such as WWW browser, an HTML-IT script converting unit 312 for converting an HTML file downloaded by the INTERNET client 311 to IT script data, and a simplified transmission unit 313 for transmitting the IT script data as a video signal to the TV receiver 11 to display the image on the TV receiver 11. By using the IT scripting verifying system, the image of the Web page after conversion can be directly displayed and looked at on the TV receiver 11 without using the broadcasting wave and it can be used as an interactive program producing support unit in the TV station 12 or the like. Further, since the INTERNET client 311 can be realized by using a normal WWW browser executed in the personal computer, the design of a page converted to an IT script can be easily verified by displaying the downloaded HTML file on the monitor of the personal computer and observing the same while comparing it with the screen of the TV receiver 11.

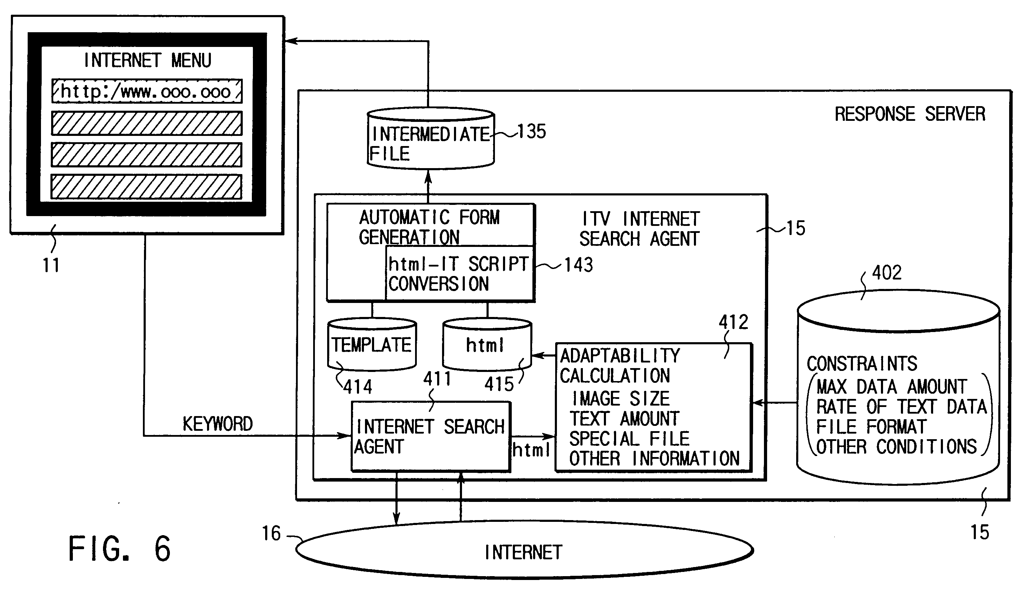

Next, an INTERNET search agent applied to the interactive TV broadcasting system of this embodiment is explained with reference to FIG. 6.

A conventional INTERNET search agent searches for a corresponding Web page in response to a keyword input from the user and automatically creates a collection of links. The INTERNET search agent used in this embodiment is obtained by improving the conventional INTERNET search agent for the interactive TV broadcasting system (which is hereinafter referred to as an ITV system) and a final output is obtained in the IT script format.

An ITV INTERNET search agent 401 can be utilized in any one of the TV station 12, TV receiver 11 and response server 15, but in FIG. 6, an example in which it is applied to the response server 15 is shown. The ITV INTERNET search agent 401 includes an INTERNET search agent 411, adaptability calculation processing unit 412, and automatic form generation unit 413.

The INTERNET search agent 411 uses, as a searching condition, a keyword supplied by the key-in operation by the operator of the response server 15 or supplied from the TV receiver 11 via the trunk line network 13 by the remote-control operation by the viewer to search for the Web page on the INTERNET from the WWW server 17. Each Web page obtained by the searching is transmitted to the adaptability calculation processing unit 412. In the adaptability calculation processing unit 412, the adaptability of conversion of the acquired Web pages to IT scripts is calculated based on the constraints determined by taking into consideration the relation between the maximum size of data transmittable as the IT script and the data amount of all of the Web pages, the rate of text data and image amount of the Web pages. Web pages having an adaptability larger than a preset adaptability are stored in an HTML file storing unit 415 of the automatic form generation unit 413 while the HTML format thereof is kept unchanged. Web pages having an adaptability equal to or smaller than the preset adaptability are discarded.

The automatic form generation unit 413 creates a menu screen in which addresses of Web pages having an adaptability larger than the preset adaptability are assigned to link buttons and creates the menu screen by extracting an HTTP address from the Web page of HTML format and assigns the address to the template of a link button stored in a form template file 414. The menu screen is held in the intermediate file 135 and displayed on the screen of the TV receiver 11 when required. As a result, for example, it becomes possible to automatically create a collection of links of Web pages suitable for the ITV system among the Web pages related to a Web page displayed on the TV receiver 11. Further, the viewer can easily look at a plurality of related Web pages by selecting a button defined by the collection of links by effecting the remote-control operation.

Further, the ITV INTERNET search agent 401 is used in the TV station 12 mainly for the purpose of omitting the program producing routine. In the selected program link broadcasting or independent broadcasting, it is effective to transmit a menu form related to a certain subject (keyword). The keyword is input by a person in charge of the program production of the TV station. Further, the constraints are input based on the default condition by the person in charge of the program production of the TV station.

Further, since it is possible to online distribute a unique program in the response server 15 separately from the TV station 12, it is also effective when a menu form is created as in the case of the TV station 12. In this case, the keyword is input by the person in charge of the program production of the online server company. The constraints are input based on the default condition by the person in charge of the program production of the online server company.

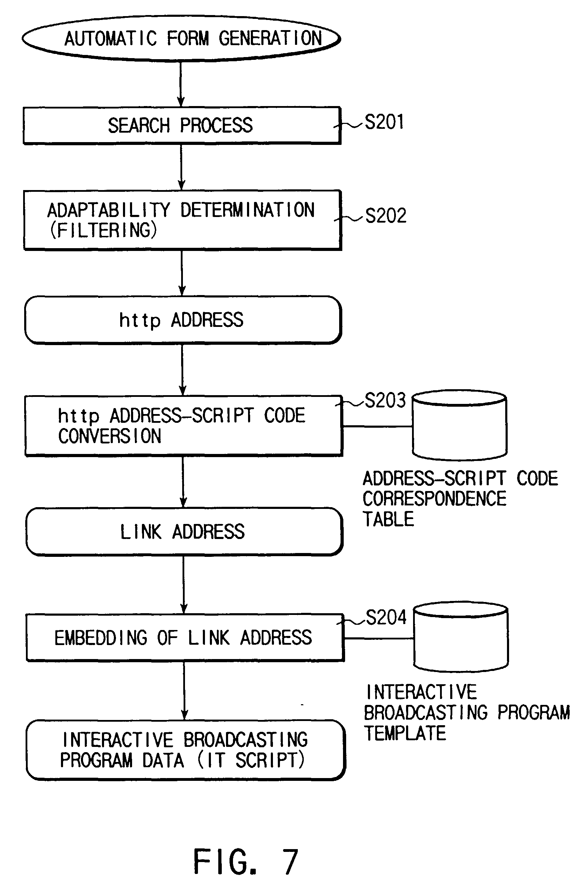

Next, the procedure of the automatic form generation process by the ITV INTERNET search agent 401 is explained with reference to the flowchart of FIG. 7.

First, the INTERNET is searched in response to the input of a keyword, for example, and a filtering process is effected according to the constraints in the interactive broadcasting (steps S201, S202). As a result, an HTTP address only of a page suitable for the ITV system is obtained. Next, whether or not the contents of the address obtained as the result of searching are already converted into a form for the ITV system is determined by referring to the address-program code correspondence table. If the conversion has been effected, the address is replaced by a program ID code (step S203). As a result, address information used as a link destination becomes an HTTP address or program ID code.

After this, a template (a screen in which available buttons having no action content set therein are arranged) prepared in the template file 414 is used, the HTTP address or program ID code is embedded in the template, and a menu of address information list in the IT script format is formed (step S204).

When one of the buttons on the menu of the address information list is selected by the remote-control operation by the viewer, the response server 15 is automatically accessed, and if an IT script corresponding to the corresponding Web page is already held in the response server 15, it is displayed on the screen of the TV receiver 11, and if the corresponding IT script is not held in the response server 15, a Web page is acquired via the INTERNET, converted to an IT script in the response server 15 and then displayed on the screen of the TV receiver 11.

As described above, in this embodiment, the HTML file circulated on the INTERNET is converted to an IT script and then distributed to the home TV receivers 11 from the TV station 12 or response server 15, but in this case, link information which is the most significant feature of the HTML file is used as an operation guiding button of the IT script. If the button is selected by the user by using a remote-control unit or the like, access to the response server 15 is automatically made via the trunk line network 14. In the response server 15, a large number of HTML files converted to interactive program scripts are previously held and an IT script corresponding to an HTML file specified by the link information assigned to the button selected by the viewer is transmitted from the response server 15 to the TV receiver 11. As a result, it becomes possible to perform a jump between Web pages as in the INTERNET and it becomes possible to easily look at desired contents present on the network on the TV receiver 11.

Further, when the telop reading jump system explained with reference FIG. 4 is applied and if link information such as the address of a Web page is displayed in the video image of a main program by use of a telop, for example, it is automatically read and the link information can be displayed as a button on the screen. If the button is selected by the remote-control operation, access to the response server 15 is made and the IT script held in the response server 15 is directly transmitted to the TV receiver 11, or the Web page present on the INTERNET is converted to an IT script and then transmitted to the TV receiver 11. As a result, it becomes possible to perform a jump from a normal program on a selected channel which does not use the IT script to the Web page of the program or the like and it becomes possible to make the present broadcasting program compatible with the INTERNET.

Further, by using the IT scripting verifying system of FIG. 5 and the ITV INTERNET search agent of FIG. 6, it becomes possible to select a Web page suitable for the IT script and automatically generate a collection of links suitable for IT scripting in a Web page corresponding to a keyword specified by the viewer or the like and provide the same to the viewer.

Further, the system of this embodiment can be applied to the transaction utilizing the INTERNET via the ITV.

The business transactions tend to be actively performed by use of the INTERNET. An interface of more simplified manner can be attained by using the ITV. Since the ITV is linked with the normal TV broadcasting, it is considered that a jump is performed from a mail-order program of TV to the page of the mail-order firm by the remote-control operation. Further, by broadcasting the page of the mail-order firm by radio, it becomes possible to look at the page free of charge without communication expenses. Even in the case of using the response server, access can be made without charging any expense on the viewer by using a method for setting the path to the response server as a free dial only for the program, for example.

## Claims

1. An interactive television broadcasting system for transmitting an interactive program script including operation guiding graphics data and various information items and superimposed on a television broadcasting signal to display the interactive program script on the screen of a television receiver and transmitting a response or service request from the viewer from the television receiver (11) to a response server (15) via a network (13), characterized by comprising:
script converting means (126, 134) for converting data with a link structure having an address of other data to be referred to as designating information to the interactive program script and converting the address as the designating information to the graphics data of the interactive program script;
means (125) for superimposing the interactive program script converted by said script converting means on the television broadcasting signal and transmitting the resultant of superimposition;
script decoder means (112) for decoding the interactive program script transmitted by said transmitting means to display the same on the screen of the television receiver; and
means (11, 15) for accessing the response server in response to the selecting operation by the viewer for the operation guiding graphics data on the screen, acquiring an interactive program script corresponding to data specified by the address designating information assigned to the graphics data from the data with the link structure previously converted as the interactive program script and held in the response server and displaying the acquired interactive program script on the screen of the television receiver by use of said script decoder means.

2. A system according to claim 1, characterized in that the response server (15) includes:
means (135) for holding data with a plurality of link structures converted to interactive program scripts by said script converting means (134);
means (131, 132, 136) for transmitting an interactive program script corresponding to data specified by the address designating information to the television receiver when the interactive program script is held in the response server; and
means (131, 132, 136) for accessing another server to acquire data specified by the address designating information when the interactive program script corresponding to data specified by the address designating information is not held in the response server, converting the acquired data to an interactive program script by use of said script converting means and transmitting the resultant of conversion to the television receiver.

3. A system according to claim 1, characterized by further comprising means (112) for storing address designating information of data displayed on the screen of the television receiver in a storing unit; and means (112) for reading out address designating information from the storing unit, acquiring an interactive program script corresponding to data specified by the address designating information from the response server or from another server via the response server, and displaying the acquired script on the screen of the television receiver.

4. A system according to claim 1, characterized by further comprising means (411) for acquiring data satisfying a preset searching condition based on a keyword from each server on the network according to the preset searching condition;
means (412) for calculating the adaptability of conversion of each of acquired data items to an interactive program script based on the constraints including the maximum data size transmittable as the interactive program script; and
means (413) for selecting data with adaptability larger than a preset adaptability from the acquired data group and assigning address information of each of the selected data items to graphics data of the interactive program script to generate an address list menu.

5. A system according to claim 1, characterized by further comprising:
means (311) for acquiring data with a link structure from each server on the network;
means (312) for converting the acquired data to the interactive program script; and
means (313) for transmitting data converted to the interactive program script to the television receiver as a video signal.

6. A data access method for referring to desired data with a desired link structure present on a network on a television receiver in an interactive television broadcasting system for transmitting an interactive program script including operation guiding graphics data and various information items and superimposed on a television broadcasting signal to display the interactive program on the screen of the television receiver and transmitting a response or service request from the viewer from the television receiver to a response server via the network, characterized by comprising the steps of:
extracting address designating information from data with the link structure having the address designating information indicating the location of other data to be referred to and converting the address designating information to graphics data of the interactive program script to convert the data with the link structure to the interactive program script;
superimposing the thus converted data with the link structure on the television broadcasting signal as the interactive program script and transmitting the resultant of superimposition;
accessing the response server in response to the selecting operation of graphics data displayed on the screen of the television receiver to acquire an interactive program script corresponding to data specified by the address designating information assigned to the graphics data from the data with the link structure previously converted as the interactive program script and held in the response server; and
displaying the acquired interactive program script on the screen of the television receiver.

7. A method according to claim 6, characterized in that the response server accesses another server to acquire data specified by the address designating information when the interactive program script corresponding to data specified by the address designating information is not held in the response server, and the acquired data is converted to the interactive program script and then transmitted to the television receiver.

8. A method according to claim 6, characterized by further comprising the steps of extracting a text, image and address designating information to other data contained in data with the link structure to be converted from the data with the link structure and replacing the text, image and address designating information on the data with the link structure by corresponding resource identifiers;
deriving a text resource, image resource and address resource for the interactive program script from the extracted text, image and address designating information;
arranging the text resource, image resource and address resource on a screen provided in the interactive program based on the arrangement relation between a control sentence contained in the data with the link structure and the resource identifiers to generate screen data of the interactive program script.

9. A method according to claim 8, characterized by further comprising the steps of dividing the generated screen data of the interactive program script into first screen data containing the resources other than the image resource and second screen data containing the image resource; and arranging an image calling graphics data for calling the second screen data from the first screen data in the first screen data.
